# EUROPÄISCHE PATENTSCHRIFT

(11) **EP 3 585 752 B1**
(45) Veröffentlichungstag und Bekanntmachung des Hinweises auf die Patenterteilung: **21.10.2026**
(21) Anmeldenummer: 18705657.7
(22) Anmeldetag: 22.02.2018
(51) Int. Cl.: C04B 28/18, C04B 14/04, C04B 18/02, C04B 40/00, C04B 103/14

(54) **OXIDISCHE ZUSAMMENSETZUNG MIT EINEM GEHALT AN SEMIGEORDNETEM CALCIUM-SILIKAT-HYDRAT**
OXIDIC COMPOSITION HAVING A CONTENT OF SEMI-ORDERED CALCIUM SILICATE HYDRATE
COMPOSITION À BASE D'OXYDES CONTENANT UN SILICATE DE CALCIUM HYDRATÉ SEMI-ORDONNÉ

(30) Priorität: 22.02.2017 EP 17157424
(43) Veröffentlichungstag der Anmeldung: 01.01.2020
(73) Patentinhaber: Cirkel GmbH & Co. KG, 45721 Haltern am See (DE)
(72) Erfinder: DAL, Attila, 48429 Rheine (DE); BECKER, Maria, 48455 Bad Bentheim (DE)
(74) Vertreter: Meissner Bolte Partnerschaft mbB
(86) Internationale Anmeldenummer: PCT/EP2018/054431
(87) Internationale Veröffentlichungsnummer: WO 2018/154013

(56) Entgegenhaltungen:
- EP-A1- 0 007 586
- WO-A1-02/070425
- WO-A1-2010/026155
- WO-A1-2016/192745
- DE-A1- 102007 062 492
- DE-A1- 2 244 299
- JP-A- H10 130 070
- NELSON S. BELL ET AL: "Morphological Forms of Tobermorite in Hydrothermally Treated Calcium Silicate Hydrate Gels", J. AM. CERAM. SOC., 79 (8), 1996, 1 January 1996 (1996-01-01), pages 2175 - 2178, XP055474014, Retrieved from the Internet <URL:https://onlinelibrary.wiley.com/doi/pdf/10.1111/j.1151-2916.1996.tb08953.x> [retrieved on 20180509]
- TASHIRO ET AL: "Effect upon strength of cement paste by addition of cement hydrates", 23RD GENERAL MEETING OF CEMENT ASSOCIATION JAPAN,, 1 January 1969 (1969-01-01), pages 136 - 141, XP009195221

## Beschreibung

Die vorliegende Erfindung betrifft eine oxidische Zusammensetzung mit einem Gehalt an semigeordnetem Calcium-Silikat-Hydrat sowie ein Verfahren zur Herstellung der oxidischen Zusammensetzung.

Calcium-Silikat-Hydrat (auch als Calciumsilikathydrat, CSH, bezeichnet) spielt eine wichtige Rolle bei der Zementhydratation. Dabei reagieren die verschiedenen Zementklinkerphasen mit Wasser im Wesentlichen zu den Zementsteinphasen Calciumsilikathydrat, Ettringit, Calcium-Aluminat-Ferrit-Phasen, Monosulfat und Portlandit.

Aus der WO 2010/026155 ist bekannt, die Zementhydratation durch Zugabe von Calciumsilikathydrat-Keimen zu Zement beschleunigen. Somit lässt sich die Festigkeitsentwicklung eines Zements durch die Zugabe von derartigen Calciumsilikathydrat-Keimen beschleunigen. Die Calciumsilikathydrat-Keime sind erhältlich durch Umsetzung einer wasserlöslichen Calciumkomponente mit einer wasserlöslichen Siliziumkomponente in wässriger Lösung oder durch Umsetzung einer Calciumverbindung mit Siliciumdioxid, jeweils in Anwesenheit eines wasserlöslichen Kammpolymers, welches als Fließmittel für hydraulische Bindemittel geeignet ist. Die dabei erhaltenen Zusammensetzungen besitzen eine ausgezeichnete Beschleunigungswirkung, aber auch eine relativ hohe Viskosität, welche die Anwendung erschweren kann, beispielsweise, wenn die Zusammensetzung gepumpt oder versprüht werden muss. Außerdem enthalten die durch Umsetzung einer wasserlöslichen Calciumkomponente mit einer wasserlöslichen Siliziumkomponente erhaltenen Zusammensetzungen Fremdionen, wie Chlorid und Nitrat, die anwendungs-technische Nachteile, wie Korrosivität, mit sich bringen.

Aus der WO 95/04007 ist ein Erstarrungs- und Härtungsbeschleuniger für silikatische, hydraulische Bindemittel bekannt, der insbesondere aus der Hydratation von Portland-Zementen, zerkleinerten Portland-Klinkern oder zusammengesetzten Portland-Zementen oder Mischungen der vorgenannten Ausgangsmaterialien durch Hydratisierung bei <90 ° C und anschließendes Vermahlen erhalten wird.

Die WO 2013/017391 beschreibt ein Verfahren zur Herstellung eines rasch abbindenden hydraulischen Bindemittels durch Vermahlen eines Zementklinkers mit 0.1 bis 5 Gew.-% eines Materials, das mehr als 15 Gew.-% Calciumsilikathydrat enthält. Dabei können auch Wasserreduzierer mitvermahlen werden, bei denen es sich um Polyoxyalkylenpolyarboxylate handelt. Als Calciumsilikathydrat-enthaltendes Material wird dabei das kommerziell erhältliche, kristalline Circolit^{®} eingesetzt.

G. Land and D. Stephan, Cement & Concrete Composites 57 (2015) 64-67 beschreiben die Verwendung von Tobermorit-Partikeln (630 nm) und Xonotlit-Partikeln (420 nm) zur Beschleunigung der Zementhydratation durch Zugabe einer wässrigen Dispersion der Partikel zu CEM I Weißzement. Es hat sich gezeigt, dass der Beschleunigungseffekt der Xonotlit-Partikel größer ist als der der Tobermorit-Partikel.

Die EP 2 243 754 A1 beschreibt ein Verfahren zur Herstellung eines belithaltigen Bindemittels, bei dem man ein Ausgangsmaterial, das Calcium-, Silizium- und Sauerstoffatome enthält, mit Wasser versetzt, bei einer Temperatur von 120 ° C bis 250 ° C hydrothermal behandelt und das erhaltene Zwischenprodukt einem Reaktionsmahlen bei einer Temperatur von 100° C bis 200° C über einen Zeitraum von 5 bis 30 Minuten unterwirft. Dabei wird unter Reaktion und Entwässerung das belithaltige Bindemittel gebildet, das wie Portlandzement eingesetzt werden kann.

Die EP 2 801 557 B9 beschreibt ein Verfahren zur Herstellung eines hochreaktiven Bindemittels, wobei man ein Ausgangsmaterial aus einem oder mehreren Rohstoffen, die CaO, MgO, SiO₂, Al₂O₃ und Fe₂O₃ oder andere Verbindungen dieser Elemente enthalten, vermischt. Die Mischung, die zwingend Mg und Al enthält, wird hydrothermal bei 100 bis 300° C und einer Verweilzeit von 0,1 bis 24 h behandelt und das erhaltene Zwischenprodukt wird bei 350 bis 600 ° C getempert. Das erhaltene Produkt enthält mindestens ein Calciumsilikat und mindestens ein Calciumaluminat.

Die EP 2 801 558 A1 beschreibt ein ähnliches Verfahren, wobei das Verfahrensprodukt jedoch als Beschleuniger des Ansteifens/Erstarrens und/oder der Erhärtung von Portlandzement verwendet wird.

Die EP 2 801 559 A1 beschreibt ein Verfahren zur Verstärkung der latent hydraulischen und/oder puzzolanischen Reaktivität von Materialien, wie Abfall- und Nebenprodukten, wobei ein Ausgangsmaterial, das eine CaO-Quelle und eine Quelle für SiO₂ und/oder Al₂O₃ enthält, mit Wasser vermischt und hydrothermal bei 100 ° C bis 300° C und einer Verweilzeit von 0,1 bis 50 h behandelt. Das erhaltene Produkt besitzt hydraulische, puzzolanische oder latent hydraulische Reaktivität.

Die PCT/EP 2016/069731 beschreibt ein Verfahren zur Herstellung einer Zusammensetzung, welche sich als Beschleuniger für die Aushärtung von Zement eignet. Das Verfahren umfasst das in Kontakt bringen eines hydraulischen oder latent hydraulischen Bindemittels mit einem Dispergiermittel, welches für die Dispergierung anorganischer Partikel in Wasser geeignet ist.

TASHIRO et al., 23rd general Meeting of Cement Association Japan, 1. Januar 1969, Seiten 136-141, untersuchen den Einfluss von synthetischem Calciumsilikathydrat auf die Festigkeit von Zementleim. Das synthetische Calciumsilikathydrat wurde bei 130 ° C 5 Tage bei 5-10 atms hergestellt. Aus dem Röntgenbeugungsdiagramm ist ersichtlich, dass das synthetische Calciumsilikathydrat erhebliche Mengen Quarz enthält.

WO 2016/192745 A1 offenbart ein Verfahren zur Herstellung eines Härtungsbeschleunigers, bei dem eine Ca-Quelle und eine Si-Quelle in wässrigem Medium in Gegenwart eines Dotiermittels umgesetzt werden. Das Dotiermittel ist ausgewählt unter P-haltigen Verbindungen, B-haltigen Verbindungen, S-haltigen Verbindungen und Mischungen davon. Bei dem Verfahren handelt es sich um eine hydrothermale Reaktion, die in einem wässrigen Medium durchgeführt wird, wobei das Gewichtsverhältnis von Feststoff zu Wasser zwischen 0,001 und 50 und ganz besonders zwischen 0,5 und 5 liegt.

Die aus dem Stand der Technik bekannten Beschleuniger auf C-S-H-Basis besitzen entweder eine nicht zufriedenstellende Beschleunigungswirkung oder bringen anwendungstechnische Nachteile mit sich (zu hohe Viskosität, Korrosivität), sodass die wirtschaftlich sinnvollen Einsatzmöglichkeiten begrenzt sind. Es hat sich gezeigt, dass die Wirkung als Beschleuniger auch von der Vorbehandlung bzw. Herstellung des Calcium-Silikat-Hydrats beeinflusst wird.

Der vorliegenden Erfindung liegt daher die Aufgabe zugrunde, eine oxidische Zusammensetzung bereitzustellen, die sich in eine Calcium-Silikat-Hydrat-enthaltende Zusammensetzung überführen lässt, welche insbesondere eine zufriedenstellende Beschleunigungswirkung auf die Erhärtung von hydraulischen bzw. latent hydraulischen Bindemitteln und verbesserte anwendungstechnische Eigenschaften aufweist.

Die Erfindung betrifft in einem Aspekt eine oxidische Zusammensetzung mit einer Teilchengröße d(97) von ≤ 5 mm, umfassend mindestens 95 Gew.-%, bezogen auf das Trockengewicht der oxidischen Zusammensetzung, Calciumoxid und Siliciumoxid mit einem molaren Verhältnis Ca/Si im Bereich von 1,0 bis 2,0, wobei die oxidische Zusammensetzung ein semigeordnetes Calciumsilikathydrat mit einer scheinbaren Kristallitgröße von 1 bis 10 nm, bestimmt mittels Röntgenbeugungsanalyse und anschließender Rietveld-Analyse, welches semigeordnete Calciumsilikathydrat (1) einen geringeren Ordnungsgrad aufweist als ein makroskopisches kristallines Calciumsilikathydrat und (2) einen höheren Ordnungsgrad als amorphes Calciumsilikathydrat, und weniger als 35 Gew.-% kristalline Phasen von Portlandit (Ca(OH)₂), Calcit (CaCO₃), Aragonit (CaCO₃), Vaterit (CaCO₃) und α -Quarz enthält.

Es wurde gefunden, dass die erfindungsgemäße oxidische Zusammensetzung eine ausgeprägtere Beschleunigungswirkung auf die Erhärtung von hydraulischen bzw. latent hydraulischen Bindemitteln besitzt als Vergleichszusammensetzungen, worin das Calciumsilikathydrat einen höheren Kristallinitätsgrad aufweist. Andererseits bleiben Härtungsbeschleuniger-Zusammensetzungen auf der Basis der erfindungsgemäßen oxidischen Zusammensetzung im Gegensatz zu solchen auf der Basis von Calciumsilikathydrat-Gelen bzw. vollständig amorphen Calciumsilikathydraten auch bei hohen Feststoffgehalten pumpfähig.

Die oxidische Zusammensetzung umfasst mindestens 95 Gew.-%, bevorzugt mindestens 98 Gew.-%, bezogen auf das Trockengewicht des mineralischen Bestandteils, Calciumoxid (CaO) und Siliciumoxid (SiO₂). Das molare Verhältnis Ca/Si liegt im Bereich von 1,0 bis 2,0, bevoruzgt 1,6 bis 2,0.

Aufgrund herstellungsbedingter Unreinheiten kann die oxidische Zusammensetzung geringe Mengen Aluminium-Ionen enthalten, wobei das molare Verhältnis von Silicium / Aluminium im mineralischen Bestandteil bei 10000: 1 bis 2: 1, bevorzugt bei 1000 : 1 bis 5 : 1, und besonders bevorzugt bei 100 : 1 bis 10 : 1 liegt.

Die oxidische Zusammensetzung ist im Wesentlichen frei von Zement, Zementklinker und/oder Ettringit. "Im Wesentlichen frei" bedeutet hier weniger als 10 Gew.-% oder weniger als 5 Gew.-%, bevorzugt weniger als 1 Gew.-% und insbesondere 0 Gew.-%, jeweils bezogen auf das Gesamtgewicht der oxidischen Zusammensetzung.

Die erfindungsgemäße oxidische Zusammensetzung umfasst ein semigeordnetes Calciumsilikathydrat. Unter "semigeordnet" wird verstanden, dass das Calciumsilikathydrat (1) einen geringeren Ordnungsgrad aufweist als ein makroskopisches kristallines Calciumsilikathydrat und (2) einen höheren Ordnungsgrad als amorphes Calciumsilikathydrat. Semigeordnetes Calciumsilikathydrat weist physikalische Eigenschaften auf, die sich sowohl von der reinen kristallinen Form als auch der reinen amorphen Form unterscheiden.

Eine geeignete Methode zur Bestimmung, ob ein Calciumsilikathydrat semigeordnet vorliegt, bedient sich der Röntgenbeugung. Beugungsdiagramme des Calciumsilikathydrats können mit einem handelsüblichen Pulverdiffraktometer aufgenommen werden. Das Röntgenbeugungsdiagramm des semigeordneten Calciumsilikathydrats unterscheidet sich vom Röntgenbeugungsdiagramm eines kristallinen Calciumsilikathydrats. Semigeordnetes Calciumsilikathydrat zeigt ein Beugungsdiagramm, bei dem die Reflexe bzw. Beugungslinien oder "Peaks" im Vergleich zum Beugungsdiagramm der kristallinen Form breiter bzw. weniger definiert und/oder teilweise abwesend sind. Unter "Peak" wird im Folgenden ein Maximum in der Auftragung der Röntgenbeugungsintensität gegen den Beugungswinkel verstanden.

Andererseits unterscheidet sich das Röntgenbeugungsdiagramm des semigeordneten Calciumsilikathydrats auch von der rein röntgenamorphen Form. Das Röntgenbeugungsdiagramm des semigeordneten Calciumsilikathydrats zeigt wenige breite phasenspezifische Röntgenbeugungsmaxima, die auf eine gewisse Ordnung des Calciumsilikathydrats hindeuten, während die röntgenamorphe Form keine unterscheidbaren Röntgenbeugungsmaxima zeigt. Der röntgenamorphen Form kann keine Calciumsilikathydratphase eindeutig zugeordnet werden.

Das semigeordnete Calciumsilikathydrat weist eine Fernordnung von weniger als 100 Wiederholungseinheiten, meist weniger als 20 Wiederholungseinheiten, der Elementarzelle in wenigstens einer Raumrichtung auf. Sind die kohärent streuenden Bereiche (Kristallite), welche den Wiederholungseinheiten der Elementarzelle entsprechen, in einer Probe sehr klein, so sind die einzelnen Kristallite, die sich eigentlich in Reflexlage befinden, oft schwach gegeneinander verkippt. Außerdem kommt es durch die Störung der Struktur an den Korngrenzen zu Veränderungen im Beugungsverhalten. Dadurch verbreitert sich der Winkelbereich, in dem es noch zu Reflexen und damit zu einem Beugungssignal kommt.

In der Praxis hat sich zur Auswertung des Beugungsdiagramms die "Whole-Pattern-Fitting-Structure-Refinement (PFSR)", von Hugo Rietveld bewährt ("Rietveld-Analyse"). Dieses Software-Verfahren dient zur Verfeinerung einer Vielzahl von Messparametern, einschließlich Gitterparametern, Signalbreite und -form. So können theoretische Beugungsmuster errechnet werden. Sobald das berechnete Beugungsmuster nahezu identisch mit den Daten einer unbekannten Probe ist, können präzise quantitative Informationen zu Kristallitgröße und amorphen Anteilen bestimmt werden.

Erfindungsgemäß weist das semigeordnete Calciumsilikathydrat eine scheinbare Kristallitgröße von 10 nm oder weniger, vorzugsweise 5 nm oder weniger auf, bestimmt mittels Röntgenbeugungsanalyse und anschließender Rietveld-Analyse. Die scheinbare Kristallitgröße beträgt wenigstens 1 nm, bevorzugt 1 nm bis 5 nm.

Die Elementarzellen der geordneten Bereiche des semigeordneten Calciumsilikathydrats, deren Größe in der vorliegenden Anmeldung anhand ihrer scheinbaren Kristallitgröße beschrieben wird, leiten sich von kristallinen Calciumsilikathydrat-Phasen (C-S-H) ab. Kristalline Calciumsilikathydrat-Phasen sind insbesondere Foshagit, Hillebrandit, Xonotlit (Belov), Xonotlit (Kudoh), Nekoit, Clinotobermorit, 9Å - Tobermorit (Riversiderit), 10Å - Tobermorit, 11Å - Tobermorit (C/S 0,75 und 0,66), 14 Å - Tobermorit (Plombierit), Jennit, Metajennit, Calcium Chondrodit, Afwillit, α - C₂SH, Dellait, Jaffeit, Rosenhahnit, Killalait, Bultfonteinit, Reinhardbraunsit, Kilchoanit, C₈S₅, Okenit, Reyerit, Gyrolith, Truscottit, K-Phase, Z-Phase, Scawtit, Fukalit, Tylleit, Spurrit und/oder Suolunit vor, bevorzugt als Xonotlit, 9Å-Tobermorit (Riversiderit), 11Å - Tobermorit, 14 Å - Tobermorit (Plombierit), Jennit, Metajennit, Afwillit und/oder Jaffeit.

Bevorzugt leiten sich die Elementarzellen der geordneten Bereiche von 9Å - Tobermorit (Riversiderit), 10Å - Tobermorit, 11Å - Tobermorit (C/S 0,75 und 0,66), 14 Å - Tobermorit (Plombierit), Scawtit und/oder Xonotlit oder Gemischen ab.

Es hat sich für die vorliegenden Zwecke als ausreichende Näherung erwiesen, für die Bestimmung der scheinbaren Kristallitgröße ausschließlich die Elementarzelle von 14 Å - Tobermorit (Plombierit) heranzuziehen.

Die oxidische Zusammensetzung enthält weniger als 35 Gew.-%, bezogen auf das Trockengewicht der oxidischen Zusammensetzung, an kristallinen Phasen, die vom semigeordneten Calciumsilikathydrat verschieden sind, d.h. kristallinen Phasen, die keine Calciumsilikathydrat-Phase (C-S-H) sind (im Folgenden auch: "kristalline Fremdphasen"). Kristalline Fremdphasen sind Portlandit (Ca(OH)₂), Calcit (CaCO₃), Aragonit (CaCO₃), Vaterit (CaCO₃) und *α*-Quarz (SiO₂). Der Gehalt kristalliner Fremdphasen kann im Bereich von 0,1 bis weniger als 35 Gew.-%, bevorzugt 1 bis 25 Gew.-%, liegen, bezogen auf das Trockengewicht der oxidischen Zusammensetzung. Das Trockengewicht wird durch Trocknung der oxidischen Zusammensetzung bei 105 ° C bis zur Gewichtskonstanz bestimmt.

Im Falle von Verunreinigungen mit Aluminium kann die oxidische Zusammensetzung auch Aluminium-haltige Phasen wie z.B. Gibbsit (Al(OH)₃) enthalten.

Typischerweise enthält die oxidische Zusammensetzung neben dem semigeordneten Calciumsilikathydrat (und gegebenenfalls kristallinen Fremdphasen) außerdem eine röntgenamorphe Phase. Gemäß einer Ausführungsform weist die oxidische Zusammensetzung mindestens ≥ 10 Gew.-%, bevorzugt ≥ 40 Gew.-%, besonders bevorzugt ≥ 60 Gew.-%, und insbesondere 10 bis 99,9 Gew.-% oder 10 bis 80 Gew.-%, vorzugsweise 40 bis 80 Gew.-%, röntgenamorphe Phase, bezogen auf das Trockengewicht der oxidischen Zusammensetzung, auf, bestimmt mittels Röntgenbeugungsanalyse und anschließender Rietveld-Analyse.

Die Summe an semigeordnetem Calciumsilikathydrat und röntgenamorpher Phase beträgt vorzugsweise wenigstens 65 Gew.-%, z.B. 65 bis 99 Gew.-%, bezogen auf das Trockengewicht der oxidischen Zusammensetzung, bestimmt mittels Röntgenbeugungsanalyse und anschließender Rietveld-Analyse.

Vorzugsweise enthält die oxidische Zusammensetzung keine oder nur eine sehr geringe Menge Fremdionen, wie Alkali, Chlorid- oder Nitrationen. In einer Ausführungsform enthält die erfindungsgemäße Zusammensetzung 2 Gew.-% oder weniger Alkalimetalle, bezogen auf das Trockengewicht der oxidischen Zusammensetzung.

Vorzugsweise weist die oxidische Zusammensetzung eine spezifische BET-Oberfläche im Bereich von 30 bis 150 m²/g, bevorzugt 80 bis 150, insbesondere 90 bis 150 m²/g, besonders bevorzugt 100 bis 150 m²/g, bestimmt nach DIN ISO 9277:2003-05, auf.

Die oxidische Zusammensetzung wird durch ein hydrothermales Verfahren unter spezifischen Bedingungen erhalten, d.h. durch hydrothermale Umsetzung einer Calciumhydroxidquelle, wie Calciumoxid bzw. Calciumhydroxid, mit Siliciumdioxid, in Anwesenheit von Wasser und bei erhöhter Temperatur von mindestens 100 ° C und erhöhtem Druck, zweckmäßigerweise in einem Autoklaven. Dabei fällt die oxidische Zusammensetzung als Festkörper mit physikalisch adsorbiertem Wasser an. Abgesehen von einem optionalen Trocknen bei einer Temperatur bis etwa 105 ° C wird sie keiner weiteren thermischen Behandlung unterworfen. Die so hergestellte oxidische Zusammensetzung enthält semigeordnetes Calciumsilikathydrat, kristalline Fremdphasen einschließlich der unumgesetzten oder bei der Umsetzung gebildeten kristallinen Fremdphasen, wie Quarz, Portlandit, Calcit etc., sowie röntgenamorphe Phasen.

Die Herstellung der oxidischen Zusammensetzung erfolgt in einem geschlossenen Behälter, beispielsweise einem Autoklaven, bei einer Temperatur im Bereich von 130 bis 180 ° C, bevorzugt 155 bis 180 oder 160 bis 180 ° C und einem sich daraus ergebenden Druck. Als Calciumoxid bzw. Calciumhydroxid können zum Beispiel von Branntkalk, Löschkalk etc. verwendet werden. Als Siliciumdioxid sind beispielsweise Quarzsand bzw. Quarzmehl, Mikrosilica etc. geeignet. Weiterhin können als Ausgangsstoffe auch puzzolanische Bindemittel wie z.B. Flugaschen, Schlacken, wie Hochofenschlacke, und/oder Metakaoline eingesetzt werden. Um die Reaktion zu erleichtern und die Reaktionszeit zu verkürzen, werden die Ausgangsstoffe im Allgemeinen mit einer mittleren Teilchengröße von < 1 mm eingesetzt. Das Siliciumdioxid hat im Allgemeinen eine Teilchengröße d(99-Wert) im Bereich von 1 bis 100 µm, insbesondere 1 bis 90 µm. Die Menge an Calciumoxid bzw. Calciumhydroxid und Siliciumdioxid wird so gewählt, dass das Molverhältnis von Ca/Si im Bereich von 1,0 bis 2,0 liegt.

Es hat sich als zweckmäßig erwiesen, bei der hydrothermalen Herstellung der oxidischen Zusammensetzung ein Schäumungsmittel, insbesondere Aluminiumpulver oder eine metallisches Aluminium enthaltende Paste, einzusetzen.

Es hat sich als vorteilhaft erwiesen, die oxidische Zusammensetzung nach der Hydrothermalsynthese zu zerkleinern. Hierzu sind übliche Vorrichtungen geeignet, wie Brecher und Kugelmühlen. Die Zerkleinerung erfolgt bis eine Teilchengröße von (d(97)-Wert) von ≤ 5 mm, bevorzugt ≤ 2 mm und insbesondere eine Teilchengröße (d(97)-Wert) im Bereich von 0,05 mm bis 5 mm, bevorzugt 0,1 mm bis 2 mm, insbesondere 0,3 mm bis 1 mm, aufweist. Die Zerkleinerung erfolgt bei einer Temperatur von ≤ 80° C, insbesondere ≤ 60° C, bevorzugt ≤ 50° C.

Die nach der Hydrothermalsynthese erhaltene oxidische Zusammensetzung wird vorzugsweise zunächst einer mechanischen Zerkleinerung bei einer Temperatur von ≤ 80 ° C, insbesondere ≤ 60° C, bevorzugt ≤ 50 ° C, unterworfen.

Die oxidische Zusammensetzung weist nach der mechanischen Zerkleinerung eine Teilchengröße (d(97)-Wert) von ≤ 5 mm, bevorzugt ≤ 2,5 mm und insbesondere ≤ 1 mm auf. Z. B. liegt die Teilchengröße (d(97)-Wert) der oxidischen Zusammensetzung nach der mechanischen Zerkleinerung im Bereich von 0,05 mm bis 5 mm, bevorzugt 0,1 mm bis 2 mm, insbesondere 0,3 mm bis 1 mm.

In einem zweiten Aspekt betrifft die Erfindung ein Verfahren zur Herstellung der vorstehend definierten oxidischen Zusammensetzung, wobei man eine oxidische Zusammensetzung durch Hydrothermalsynthese unter spezifischen Bedingungen herstellt. Die erhaltene oxidische Zusammensetzung wird dann in einem wässrigen Medium mit mindestens einem wasserlöslichen polymeren Dispergiermittel in Kontakt gebracht, wobei man eine als Härtungsbeschleuniger-Zusammensetzung erhält.

Der hier verwendete Ausdruck "umfassend" oder "umfasst" beinhaltet auch die Ausdrücke "im Wesentlichen bestehend aus" und " bestehend aus" ohne mit diesen Ausdrücken synonym zu sein.

### Wasserlösliches polymeres Dispergiermittel

Unter "wasserlöslichem polymerem Dispergiermittel" wird hier ein organisches wasserlösliches polymeres Dispergiermittel verstanden, d.h. es handelt sich um ein organisches Polymer, welches in Wasser bei 20 ° C und Normaldruck eine Löslichkeit von mindestens 1 Gramm pro Liter, insbesondere mindestens 10 Gramm pro Liter und besonders bevorzugt von mindestens 100 Gramm pro Liter aufweist.

Das Dispergiermittel ist insbesondere ein Kammpolymer. In einer Ausführungsform weist das Kammpolymer zumindest eine Struktureinheit der oben definierten allgemeinen Formeln (la), (Ib), (Ic) und/oder (Id) auf, wobei die Struktureinheiten (la), (Ib), (Ic) und (Id) sowohl innerhalb einzelner Polymermoleküle, als auch zwischen verschiedenen Polymermolekülen gleich oder verschieden sein können.

Besonders bevorzugt handelt es sich bei der Struktureinheit nach Formel la um eine Methacrylsäure- oder Acrylsäure-Einheit, bei der Struktureinheit nach Formel Ic um eine Maleinsäureanhydrid-Einheit und bei der Struktureinheit nach Formel Id um eine Maleinsäure- oder eine Maleinsäuremonoester-Finheit.

Soweit die Monomere (I) Phosphorsäureester oder Phosphonsäureester sind, können sie auch die entsprechenden Di- und Triester sowie den Monoester der Diphosphorsäure umfassen. Diese entstehen im allgemeinen bei der Veresterung von organischen Alkoholen mit Phosphorsäure, Polyphosphorsäure, Phosphoroxiden, Phosphorhalogeniden oder Phosphoroxyhalogeniden bzw. den entsprechenden Phosphonsäureverbindungen neben dem Monoester in unterschiedlichen Anteilen, beispielsweise 5-30 Mol-% Diester und 1-15 Mol-% Triester sowie 2-20 Mol-% des Monoesters der Diphosphorsäure.

In einer Ausführungsform weist das Kammpolymer zumindest eine Struktureinheit der oben definierten allgemeinen Formeln (IIa), (IIb), (IIc) und/oder (IId) auf. Die allgemeinen Formeln (IIa), (IIb), (IIc) und (IId) können sowohl innerhalb einzelner Polymermoleküle, als auch zwischen verschiedenen Polymermolekülen gleich oder verschieden sein. Alle Struktureinheiten A in den genannten Formeln können sowohl innerhalb einzelner Polyetherseitenketten, als auch zwischen verschiedenen Polyetherseitenketten gleich oder verschieden sein.

Besonders bevorzugt handelt es sich bei der Struktureinheit nach Formel IIa um eine alkoxylierte Isoprenyl-, alkoxylierte Hydroxybutylvinylether-, alkoxylierte (Meth)allylalkohol-, oder um eine vinylierte Methylpolyalkylenglykol-Einheit, jeweils vorzugsweise mit einem arithmetischen Mittel von 2 bis 350 Oxyalkylengruppen.

Gemäß einer Ausführungsform enthält das Kammpolymer die Struktureinheiten der Formeln (I) und (II). Neben den Struktureinheiten der Formeln (I) und (II) kann das polymere Dispergiermittel auch weitere Struktureinheiten enthalten, die sich von radikalisch polymerisierbaren Monomeren ableiten, wie Hydroxyethyl(meth)acrylat, Hydroxy-propyl(meth)acrylat, (Meth)acrylamid, (C₁-C₄)-alkyl(meth)acrylate, Styrol, Styrolsulfonsäure, 2-Acrylamido-2-methylpropansulfonsäure, (Meth)allylsulfonsäure, Vinylsulfonsäure, Vinylacetat, Acrolein, N-Vinylformamid, Vinylpyrrolidon, (Meth)allylalkohol, Isoprenol, 1-Butylvinylether, Isobutylvinylether, Aminopropyvinylether, Ethylenglykolmonovinylether, 4-Hydroxybutylmonovinylether, (Meth)acrolein, Crotonaldehyd, Dibutylmaleat, Dimethylmaleat, Diethylmaleat, Dipropylmaleat, etc.

Die Herstellung der Kammpolymere, welche die Struktureinheiten (I) und (II) enthalten, erfolgt in üblicher Weise, beispielsweise durch radikalische Polymerisation. Sie ist z. B. beschrieben in EP0894811, EP1851256, EP2463314, EP0753488.

In einer Ausführungsform ist das Kammpolymer ein Polykondensationsprodukt, das die oben definierten Struktureinheiten (III) und (IV) umfasst.

Die Struktureinheiten T und D in den allgemeinen Formeln (III) und (IV) des Polykondensationsprodukts sind vorzugsweise abgeleitet von Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl, Phenoxyessigsäure, Salicylsäure, vorzugsweise von Phenyl, wobei T und D unabhängig voneinander gewählt werden können und auch jeweils von einer Mischung der genannten Reste abgeleitet sein können. Die Gruppen B und E stehen unabhängig voneinander vorzugsweise für O. Alle Struktureinheiten A können sowohl innerhalb einzelner Polyetherseitenketten, als auch zwischen verschiedenen Polyetherseitenketten gleich oder verschieden sein. A steht in einer besonders bevorzugten Ausführungsform für C₂H₄.

In der allgemeinen Formel (III) steht a vorzugsweise für eine ganze Zahl von 1 bis 300 und insbesondere 5 bis 150, und in der allgemeinen Formel (IV) steht b vorzugsweise für eine ganze Zahl von 1 bis 300, insbesondere 1 bis 50 und besonders bevorzugt 1 bis 10. Weiterhin können die Reste der allgemeinen Formeln (III) oder (IV) unabhängig voneinander jeweils die gleiche Kettenlänge besitzen, wobei a und b jeweils durch eine Zahl repräsentiert wird. Es wird dabei in der Regel zweckmäßig sein, wenn jeweils Mischungen mit unterschiedlichen Kettenlängen vorliegen, so dass die Reste der Struktureinheiten im Polykondensationsprodukt für a und unabhängig für b unterschiedliche Zahlenwerte aufweisen.

Im allgemeinen weist das Polykondensationsprodukt ein gewichtsmittleres Molekulargewicht von 5.000 g/mol bis 200.000 g/mol, vorzugsweise 10.000 bis 100.000 g/mol und besonders bevorzugt 15.000 bis 55.000 g/mol auf.

Das Molverhältnis der Struktureinheiten (III):(IV) beträgt typischerweise 4:1: bis 1:15 und vorzugsweise 2:1 bis 1:10. Es ist vorteilhaft, über einen relativ hohen Anteil an Struktureinheiten (IV) im Polykondensationsprodukt zu verfügen, da eine verhältnismäßig hohe negative Ladung der Polymere einen guten Einfluss auf die Stabilität der wässrigen kolloid-dispersen Zubereitung hat. Das Molverhältnis der Struktureinheiten (IVa):(IVb), wenn beide enthalten sind, beträgt typischerweise 1:10 bis 10:1 und vorzugsweise 1:3 bis 3:1.

In einer bevorzugten Ausführungsform enthält das Polykondensationsprodukt eine weitere Struktureinheit (V), die durch die folgende Formel repräsentiert wird: 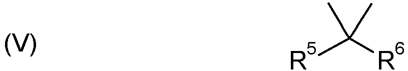 worin
- R⁵: für H, CH₃, COOH oder substituiertes oder unsubstituiertes Phenyl oder substituiertes oder unsubstituiertes Naphthyl steht;
- R⁶: H, CH₃, COOH oder substituiertes oder unsubstituiertes Phenyl oder substituiertes oder unsubstituiertes Naphthyl steht.

Vorzugsweise stehen R₅ und R₆ für H oder einer der Reste R₅ und R₆ steht für H und der andere für CH₃.

Typischerweise sind R⁵ und R⁶ in Struktureinheit (V) gleich oder verschieden und stehen für H, COOH und/oder Methyl. Ganz besonders bevorzugt ist H.

In einer anderen Ausführungsform beträgt das Molverhältnis der Struktureinheiten [(III) + (IV)]: (V) im Polykondensat 2:1 bis 1:3, bevorzugt 1:0,8 bis 1:2.

Die Polykondensate werden typischerweise nach einem Verfahren hergestellt, bei dem man die Verbindungen miteinander umsetzt, die den Struktureinheiten (III), (IV) und (V) zugrundeliegen. Die Herstellung der Polykondensate ist beispielsweise beschrieben in WO 2006/042709 und WO 2010/026155.

Vorzugsweise ist das Monomer mit einer Ketogruppe ein Aldehyd oder Keton. Beispiele für Monomere der Formel (V) sind Formaldehyd, Acetaldehyd, Aceton, Glyoxylsäure und/oder Benzaldehyd. Formaldehyd ist bevorzugt.

Das Kammpolymer kann auch in Form seiner Salze, wie beispielsweise des Natrium-, Kalium-, organischen Ammonium-, Ammonium- und/oder Calciumsalzes, vorzugsweise als Natrium- und/oder Calciumsalz, vorliegen.

Das Molgewicht des polymeren Dispergiermittels, bestimmt mittels Gelchromatographie mit Polystyrol als Standard, liegt im Allgemeinen im Bereich von 5 000 bis 100 000. Das Molgewicht der Seitenketten liegt dabei im Allgemeinen im Bereich von 1000 bis 10 000.

Die Ladungsdichte der Polymere liegt im Allgemeinen im Bereich von 500 µeq/g bis 1500 µeq/g.

Bevorzugte polymere Dispergiermittel sind:
Copolymere, die Struktureinheiten der Formeln (la) und (IIa) umfassen, insbesondere Copolymere, die Struktureinheiten umfassen, die abgeleitet sind von Acrylsäure und/oder Methacrylsäure und ethoxylierten Hydroxyalkylvinylethern, wie ethoxyliertem Hydroxybutyl-vinylether;

Copolymere, die Struktureinheiten der Formeln (la), (Id) und (IIa) umfassen, insbesondere Copolymere, die Struktureinheiten umfassen, die abgeleitet sind von Acrylsäure und/oder Methacrylsäure, Maleinsäure und ethoxylierten Hydroxyalkylvinylethern, wie ethoxyliertem Hydroxybutylvinylether;

Copolymere, die Struktureinheiten der Formeln (la) und (IIc) umfassen, insbesondere Copolymere, die Struktureinheiten umfassen, die abgeleitet sind von Acrylsäure und/oder Methacrylsäure und Estern der Acrylsäure oder Methacrylsäure mit Polyethylenglykol oder Polyethylenglykol, das mit C₁-C₁₂-Alkyl endverschlossen ist;

Polykondensationsprodukten, die Struktureinheiten (III), (IVa) und (V) umfassen, insbesondere Kondensationsprodukte aus ethoxyliertem Phenol, Phenoxy-C₂-C₆-alkanolphosphat und Formaldehyd;

Homopolymeren, die Sulfo- und/oder Sulfonatgruppen-enthaltende Einheiten oder Carbonsäure- und/oder Carboxylatgruppen-enthaltende Einheiten umfassen;
Copolymeren, die Sulfo- und/oder Sulfonatgruppen-enthaltende Einheiten und Carbonsäure- und/oder Carboxylatgruppen-enthaltende Einheiten umfassen; und/oder
Polyacrylsäure;
und die Salze davon und Kombinationen von zwei oder mehreren dieser Dispergiermittel.

In Kontakt bringen der oxidischen Zusammensetzung mit dem wasserlöslichen polymeren Dispergiermittel

Für das in Kontakt bringen mit dem polymeren Dispergiermittel kann die oxidische Zusammensetzung in Form einer Suspension oder als Trockenpulver eingesetzt werden. Das polymere Dispergiermittel wird dann auf einmal oder in zwei oder mehreren Portionen zu der Suspension, welche die oxidische Zusammensetzung enthält, gegeben, entweder als Feststoff oder in Form einer wässrigen Lösung. Vorzugsweise wird jedoch die oxidische Zusammensetzung auf einmal oder in zwei oder mehreren Portionen als Feststoff oder als wässrige Suspension in eine wässrige Lösung des polymeren Dispergiermittels gegeben.

In einer weiteren Ausführungsform liegt das Gewichtsverhältnis der oxidischen Zuammensetzung (berechnet als Trockenkomponente) zu polymerem Dispergiermittel im Bereich von 15 : 1 bis 1 : 2, insbesondere im Bereich von 10 : 1 bis 1 : 1,5, insbesondere bevorzugt im Bereich von 5 : 1 bis 1 : 1. In einer weiteren Ausführungsform liegt das Gewichtsverhältnis der oxidischen Zusammensetzung (berechnet als Trockenkomponente) zu Wasser im Bereich von 3 : 1 bis 1 : 20, insbesondere im Bereich 1 : 1 bis 1 : 10, .insbesondere bevorzugt 2 : 3 bis 1 : 5.

Die Bestimmung der Trockenkomponente der oxidischen Zusammensetzung erfolgt durch Trocknen des Materials bei 105 ° C im Laborofen bis zur Gewichtskonstanz und dem sich daraus ergebenen Trocknungsverlustes an Gewicht.

Das in Kontakt bringen der oxidischen Zusammensetzung erfolgt unter Eintrag von kinetischer Energie, beispielsweise durch Vermischen oder Vermahlen. Hierzu sind praktisch alle dem Fachmann bekannten Einrichtungen geeignet.

Unter Vermischen oder Mischen ist im Rahmen dieser Erfindung ein Vermengen oder Homogenisieren zu verstehen, das den Kontakt der zu vermischenden Komponenten intensiviert und damit eine gleichmäßige und/oder rasche Bildung des gewünschten Produktes ermöglicht.

Methoden, die ein Vermischen bewirken sind beispielsweise Rühren, Schütteln, das Eindüsen von Gasen oder Flüssigkeiten und das Bestrahlen mit Ultraschall. Geeignete Verfahren und Vorrichtungen, die ein Vermischen bewirken, sind dem Fachmann bekannt. Geeignete Mischapparaturen sind beispielsweise Rührkessel, dynamische und statische Mischer, einwellige Rührwerke, beispielsweise Rührwerke mit Abstreifvorrichtungen, insbesondere sogenannte Pastenrührwerke, mehrwellige Rührwerke, insbesondere PDSM-Mischer, Feststoffmischer sowie Misch-/Knetreaktoren. Bevorzugt sind jedoch Verfahren, die eine hohe Scherenergie einbringen. Insbesondere bevorzugt wird das erfindungsgemäße Verfahren deshalb zumindest zeitweise unter Verwendung einer Vorrichtung aus der Reihe Zahnkolloidmühle, Perlmühle, Kugelmühle, Ultraschall-Geräte, Rotor-Stator-Mischer (z.B. IKA Ultra-Turrax) und Dissolver-Scheibe durchgeführt.

In einer bevorzugten Ausführungsform findet das in Kontakt bringen unter Einbringen von Scherenergie statt, wobei mehr als 50 kWh, insbesondere mehr als 200 kWh, bevorzugt mehr als 400 kWh, besonders 100 bis 5.000 kWh, insbesondere 200 bis 3000 kWh, insbesondere bevorzugt 300 bis 1000 kWh Scherenergie pro Tonne der Zusammensetzung eingebracht werden.

Die Scherenergie ist definiert als Wirkarbeit W_{W}, die sich aus der für die Mahlung aufgewendeten Scherleistung P_{W} und der Mahldauer t entsprechend nachfolgender Gleichung (1) ergibt: ${W}_{W} = {P}_{W} ⋅ t$

Die Scherleistung, die dabei auf die Suspension einwirkt, ergibt sich aus der Differenz zwischen Wirkleistung P_{P} (Leistungsaufnahme des Geräts während der Vermahlung der Suspension) und der Nullleistung P₀ (Leistungsaufnahmen des Geräts im Leerlauf ohne Suspension und ggf. ohne Mahlkugeln z.B. im Falle einer Perlmühle, Kugelmühle oder Zahnkolloidmühle) mittels nachfolgender Gleichung (2): ${P}_{W} = {P}_{P} - {P}_{0}$

Die Nullleistung (Gleichung (3a)) bzw. die Wirkleistung (Gleichung (3b)) ergeben sich aus der Wirkspannung U und der Wirkstromstärke I, die mittels Strommessgerät an Gerät im Betrieb gemessen wird: ${P}_{0} = {U}_{0} ⋅ {I}_{0} ⋅ cos ϕ ; cos ϕ = 1$ ${P}_{P} = {U}_{P} ⋅ {I}_{P} ⋅ cos ϕ ; cos ϕ = 1$

Das Verhältnis von Wirkleistung P_{P} zur Scheinleistung P_{S} des Geräts wird durch cos *ϕ* nach Gleichung (4) beschrieben: $cos ϕ = {P}_{P} / {P}_{S}$

Da die Scheinleistung sehr gerätespezifisch ist und die Wirkleistung einfach gemessen werden kann (durch Messung der Wirkspannung und der Wirkstromstärke) wird zur Vereinfach der cos *ϕ* = 1 angenommen.

Insbesondere kann das Einbringen von Scherenergie durch Vermahlen, wie in einer Rührwerkskugelmühle, durchgeführt werden. Die Rührwerkskugelmühle umfasst eine die Mahlkörper enthaltende Mahlkammer, einem Stator und einem Rotor, welche in der Mahlkammer angeordnet sind. Weiterhin bevorzugt umfasst die Rührwerkskugelmühle eine Mahlgut-Einlassöffnung und eine Mahlgut-Auslassöffnung zum Zuführen und Abführen von Mahlgut in die bzw. aus der Mahlkammer, sowie einer in der Mahlkammer stromauf von der Auslassöffnung angeordneten Mahlkörper-Trenneinrichtung, die dazu dient, in dem Mahlgut mitgeführte Mahlkörper aus dem Mahlgut abzutrennen, bevor dieses durch die Auslassöffnung aus dem Mahlraum abgeführt wird.

Um die in das Mahlgut in der Mahlkammer eingetragene mechanische Mahlleistung zu steigern, sind bevorzugt am Rotor und/oder am Stator Stifte vorhanden, die in den Mahlraum ragen. Im Betrieb wird somit einerseits auf direktem Wege durch Stöße zwischen dem Mahlgut und den Stiften ein Beitrag zur Mahlleistung erbracht. Andererseits erfolgt ein weiterer Beitrag zur Mahlleistung auf indirektem Wege, durch Stöße zwischen den Stiften und den im Mahlgut mitgeführten Mahlkörpern und den dann wiederum erfolgenden Stößen zwischen dem Mahlgut und den Mahlkörpern. Schließlich tragen auch noch auf das Mahlgut einwirkende Scherkräfte und Dehnkräfte zur Zerkleinerung der suspendierten Mahlgutpartikel bei.

In einer Ausführungsform erfolgt das in Kontakt bringen mit dem polymeren Dispergiermittel in zwei Stufen. In der ersten Stufe erfolgt das in Kontakt bringen so lange, bis die Teilchengröße d(99) der oxidischen Zusammensetzung ≤ 300 µm ist und insbesondere im Bereich von 0,5 bis 300 µm liegt. Dies kann unter Verwendung einer Vorrichtung erfolgen, die ausgewählt ist unter einer Mahlvorrichtung, einem Ultraschallgerät, einem Rotor-Stator-Mischsystem, und einer Dissolver-Scheibe.

In der zweiten Stufe erfolgt das in Kontakt bringen so lange, bis die oxidische Zusammensetzung eine d(50)-Teilchengröße von ≤ 400 nm, bevorzugt ≤ 300 nm, besonders bevorzugt ≤ 200 nm, bestimmt mittels statischer Lichtstreuung, aufweist. Dies erfolgt insbesondere unter Verwendung einer Mahlvorrichtung.

Es hat sich als zweckmäßig erwiesen, vor dem Einbringen von kinetischer Energie eine Ruhezeit der Suspension von 0,01 h bis 48 h, bevorzugt 4 h bis 24 h, besonders bevorzugt 6 h bis 16 h, eingehalten wird, während der die Suspension ohne Einwirkung von hoher Scherenergie, d.h. Scherenergien von < 50 kWh/to Suspension, in einem Rührkessel ruht bzw. gerührt wird, um eine Sedimentation zu unterbinden. Wenn das in Kontakt bringen mit dem polymeren Dispergiermittel in zwei Stufen erfolgt, kann die Ruhezeit vor der ersten Stufe oder zwischen den beiden Stufen erfolgen.

### Härtungsbeschleuniger-Zusammensetzung

Die Erfindung betrifft auch eine Härtungsbeschleuniger-Zusammensetzung, die die oxidische Zusammensetzung und ein wasserlösliches polymeres Dispergiermittel enthält.

Die Erfindung betrifft auch Baustoffmischungen (bauchemische Mischungen), welche dieHärtungsbeschleuniger-Zusammensetzungen enthalten.

Die erfindungsgemäße Baustoffmischung kann auch weitere Additive enthalten, die typischerweise auf dem Gebiet der Bauchemikalien verwendet werden, wie andere Erhärtungsbeschleuniger, Dispergiermittel, Verflüssiger, Wasserreduktionsmittel, Erstarrungsverzögerer, Entschäumer, Luftporenbildner, Verzögerer, schwindungsverringernde Mittel, redispergierbare Pulver, Frostschutzmittel und/oder Antiausblühmittel.

Geeignete andere Erhärtungsbeschleuniger sind Alkanolamine, bevorzugt Triisopropanolamin und/oder Tetrahydroxyethylethylendiamin (THEED). Vorzugsweise werden die Alkanolamine in einer Dosierung von 0,01 bis 2,5 Gew.-%, bezogen auf das Gewicht des hydraulischen Bindemittels, eingesetzt. Bei Verwendung von Aminen, insbesondere Triisopropanolamin und Tetrahydroxyethylethylendiamin, können synergistische Effekte bezüglich der Frühfestigkeitsentwicklung von hydraulischen Bindemittelsystemen, insbesondere zementartigen Systemen, gefunden werden.

Weitere geeignete andere Erhärtungsbeschleuniger sind beispielsweise Calciumchlorid, Calciumformiat, Calciumnitrat, anorganische Karbonate (wie Natriumkarbonat, Kaliumkarbonat), 1,3-Dioxolan-2-on und 4-Methyl-1,3-dioxolan-2-on. Vorzugsweise werden Calciumformiat und Calciumnitrat in einer Dosierung von 0,1 bis 4 Ma.-% bezogen auf das hydraulische Bindemittel eingesetzt.

Geeignete Dispergiermittel, Verflüssiger, Wasserreduktionsmittel sind beispielsweise: a) sulfonierte Melamin-Formaldehyd Kondensate, b) Lignosulfonate, c) sulfonierte Ketone-Formaldehyde Kondensate, d) sulfonierte Naphthalin-Formaldehyd Kondensate (BNS), e) Polycarboxylatether (PCE), f) nicht-ionische Copolymere zur Verlängerung der Verarbeitbarkeit einer zementären Mischung, die Zement und Wasser enthält, wobei das Copolymer Einheiten umfasst, die von wenigstens den folgenden Monomerkomponenten abgeleitet sind: Komponente A, nämlich ein ethylenisch ungesättigtes Carbonsäureestermonomer mit einer in der zementären Mischung hydrolysierbaren Einheit; und Komponente B, nämlich ein ethylenisch ungesättigtes Carbonsäureestermonomer oder Alkenylethermonomer, umfassend wenigstens eine Poly-C₂₋₄-oxyalkylenseitenkette mit 1 to 350 Oxyalkyleneinheiten oder g) Phosphonatgruppen-enthaltende Dispergiermittel der Formel R-(OA)ₙ-N-[CH₂-PO(OM₂)₂]₂, worin R für H oder einen gesättigten oder ungesättigten Kohlenwasserstoffrest, vorzugsweise einen C₁ bis C₁₅-Alkylrest steht; A gleich oder verschieden sein kann und für Alkylene mit 2 bis 18 Kohlenstoffatomen, vorzugsweise für Ethylen und/oder Propylen, insbesondere Ethylen, steht; n für 5 bis 500, vorzugsweise10 bis 200, insbesondere 10 bis 100 steht und M für H, ein Alkalimetall, 1/2 Erdalkalimetall und/oder ein Amin steht, wobei jede Kombination der genannten Dispergiermittel a) bis g) umfasst ist.

Geeignete Erstarrungsverzögerer sind Zitronensäure, Weinsäure, Glukonsäure, Phosphonsäure, Aminotrimethylenphosphonsäure, Ethylendiaminotetra-(methylenphosphon)säure, Diethylentriaminopenta(methylen-phosphon)säure, jeweils einschließlich der jeweiligen Salze der Säuren, Pyrophosphate, Pentaborate, Metaborate und/oder Zucker (z.B. Glukose, Melassen) enthalten. Der Vorteil der Zugabe von Erstarrungsverzögerern besteht darin, dass die offene Zeit gesteuert und insbesondere gegebenenfalls verlängert werden kann. Vorzugsweise werden die Erstarrungsverzögerer in einer Dosierung von 0,01 Gew.-% bis 0,5 Gew.-%, bezogen auf das Gewicht des hydraulischen Bindemittels, vorzugsweise Zement, eingesetzt.

Die Härtungsbeschleuniger-Zusammensetzung zeigt insbesondere eine überraschend starke Beschleunigungswirkung auf die Erhärtung von hydraulischen bzw. latent hydraulischen Bindemitteln, insbesondere Portland-Zement. Durch Verwendung der Calcium-Silikat-Hydrat-enthaltenden Zusammensetzung lässt sich die Frühfestigkeit der hydraulisch bzw. latent hydraulisch abbindenden Bindemittel, insbesondere Portland-Zement, verbessern. Weiter besitzt die Zusammensetzung verbesserte anwendungstechnische Eigenschaften, wie eine niedrige Viskosität in den für die Anwendung relevanten Konzentrationsbereichen. Sie ist daher einfach zu handhaben und erlaubt ein leichtes Pumpen und Versprühen.

Unter Frühfestigkeit ist hier bei hydraulisch abbindenden Bindemitteln die Druckfestigkeit 6 Stunden nach dem Anmischen des hydraulisch abbindenden Bindemittels mit Wasser zu verstehen. Bei latent hydraulisch abbindenden Bindemitteln ist unter Frühfestigkeit die Druckfestigkeit 7 Tage nach dem Anmischen des hydraulisch abbindenden Bindemittels mit Wasser zu verstehen.

Die Erfindung betrifft weiter die Verwendung der Härtungsbeschleuniger-Zusammensetzungen zur Erhärtungsbeschleunigung von bauchemischen Mischungen, enthaltend ein hydraulisches oder latent hydraulisches Bindemittel, insbesondere Zement, Schlacke, vorzugsweise granulierte Hochofenschlacke, Flugasche, Silikamehl, Metakaolin, natürliche Puzzolane, kalzinierten Ölschiefer, Kalziumsulfoaluminatzemente und/oder Kalziumaluminatzemente, vorzugsweise von bauchemischen Mischungen, die überwiegend Zement als hydraulisches Bindemittel enthalten.

Die Dosierung der erfindungsgemäßen Härtungsbeschleuniger-Zusammensetzungen beträgt vorzugsweise von 0,01 Gew.-% bis 15 Gew.-%, bevorzugt 0,1 Gew.-% bis 10 Gew.-%, besonders bevorzugt 0,1 Gew.-% bis 5 Gew.-% des Feststoffes der Zusammensetzungen, bezogen auf das hydraulische oder latent hydraulische Bindemittel.

Die Erfindung wird durch die beigefügten Zeichnungen und die nachfolgenen Beispiele näher veranschaulicht.

Fig. 1 zeigt Röntgenbeugungsspektren von Proben, die (i) kristallinen Tobermorit 14 Å (Kristallitgröße 50 nm), (ii) amorphes Calciumsilicathydrat (Tobermorit 14 Å; Kristallitgröße 0,5 nm) enthalten und eine Röntgenbeugunsspektrum eines erfindungsgemäß geeigneten semigeordneten Calciumsilikathydrats (htCSH3)nach Rietveld-Analyse.

Fig. 2 zeigt Röntgenbeugungsspektren eines hydrothermalen Calciumsilicathydrats (htCSH1, Vergleich) und zweier erfindungsgemäß geeigneter semigeordneter Calciumsilikathydrat (htCSH2 und htCSH3).

Die unterscheidbaren Peaks bzw. Maxima wurden den Phasen zugeordnet; die Abkürzugen bedeuten:
P - Portlandit
Cc - Calcit
Qz - alpha-Quarz
T - Tobermorit 14 Å
sCSH - semigeordnetes Calciumsilicathydrat
aCSH - amorphes Calciumsilicathydrat
Xo - Xonotlit

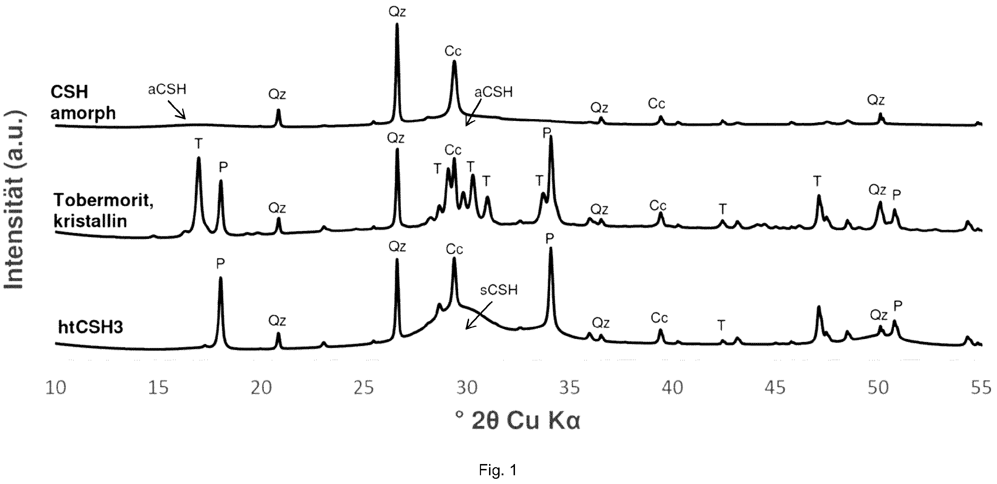

Gemäß Fig. 1 zeigt kristalliner Tobermorit ein gut aufgelöstes Spektrum mit scharfen Peaks; im Spektrum des amorphen Calciumsilicathydrats sind keine einer kristallinen Calciumsilicathydrat-Phase zuordenbaren Maxima vorhanden. Der Beitrag des amorphen Calciumsilicathydrats zum Röntgenbeugunsspektrum mach sich durch einen erhöhten Untergrund insbesondere im 2θ-Bereich zwischen 25° und 35° (Cu Kα) bemerkbar. Das erfindungsgemäß geeignete semigeordnete Calciumsilikathydrat zeigt eine Verbreiterung und Überlagerung der Tobermorit-Maxima um 2θ = 30° , die einzelnen Peaks sind nicht mehr aufgelöst.

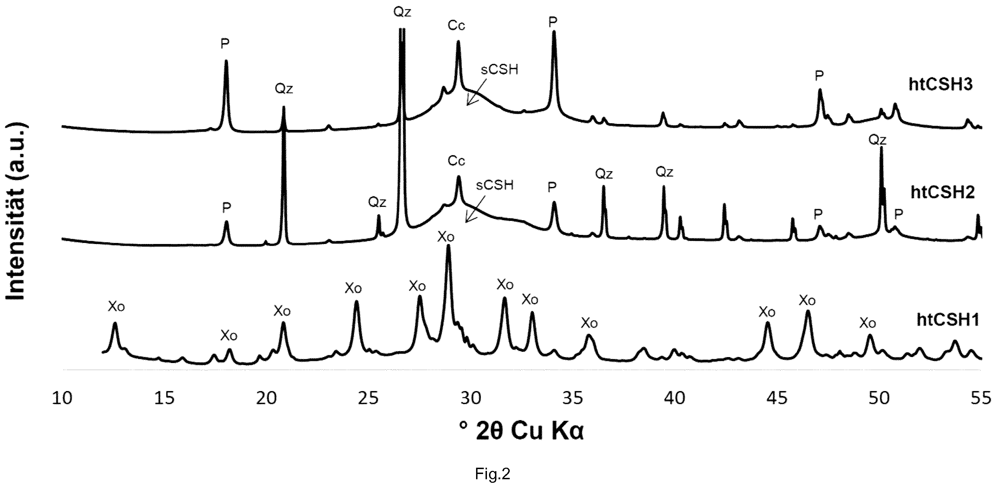

Gemäß Fig. 2 zeigt das hydrothermale Calciumsilicathydrat htCSH1 ein gut aufgelöstes Spektrum mit scharfen Xonotlit-Peaks. Die erfindungsgemäß geeigneten semigeordneten Calciumsilikathydrate htCSH2 und htCSH3 zeigen breite Maxima um 2θ = 30° .

### Beispiele

### Bestimmungsmethoden

### Partikelgröße des Rohstoffs (Oxidische Zusammensetzung)

Die Partikelgröße des Rohstoffs für die Nassmahlung wurde mittels statischer Lichstreuung charakterisiert. Dazu wurde das Gerät Mastersizer 2000 der Firma Malvern verwendet.

### Bestimmung der spezifischen Oberfläche nach BET

Die spezifische Oberfläche nach BET des Rohstoffs für die Nassmahlung wurde mittels Stickstoffadsorption ermittelt. Hierfür wurde das Gerät "NOVA 4000e Surface Area and Pore Size Analyzer" der Firma Quantachrome verwendet. Für die Messungen wurden die Proben im Vorfeld bei 105° C bis zur Gewichtskonstanz getrocknet.

Röntgenbeugungsanalyse (XRD) und Rietveld-Analyse zur Bestimmung des röntgenamorphen Anteils und der Kristallitgröße vom Calcium-Silikat-Hydrats:
Die XRDs wurden mit einem Bruker AXS D4 ENDEAVOR (CuK*_{α}*-Strahlung, 40 kV, 40 mA) und die Rietveld-Messungen mit der Software Topas 4.2 von Bruker durchgeführt. Für die XRD-Analyse wurde das hydrothermale C-S-H aus dem Autoklavenprozess mittels Backenbrecher und Gegenprallmühle auf eine Partikelgröße mit einem d(95)-Wert von ≤ 1 mm zerkleinert. Anschließend wurden 5 g des Pulvers bei 105° C für 1 h im Laborofen getrocknet.

Für die XRD-Analyse wurden je 2 g des getrockneten Pulvers im Achatmörser so lange zerkleinert, bis die Probe vollständig durch ein Sieb mit einer Maschenweite von 36 µm gestrichen werden konnte.

Die Probe zur Bestimmung des röntgenamorphen Anteils war ein homogen vermischtes Pulver, das die Probe und eine bekannte Menge eines internen kristallinen Standards enthielt. Für diese Untersuchungen wurden 15 Ma.-% bis 30 Ma.-% Fluorit (CaF₂) mit der Probe (Partikelgröße < 36 µm) im Achatmörser homogen verrieben. Anschließend wurde das homogenisierte Pulver, welches Fluorit als internen Standard enthält, mittels "Front Loading" präpariert und vermessen. Voraussetzung für die Verwendung von Fluorit als internen Standard ist, dass Fluorit nicht in der originalen Probe enthalten ist. Es ist ein Standard mit einem Massenschwächungskoeffizienten (mass attenuation coefficient, MAC) zu wählen, der dem der Probe ähnlich ist, um den Röntgenadsorptionskontrast zu minimieren. Die Proben haben einen MAC-Wert für Cu K*_{α}*-Strahlung zwischen 75 und 80 cm²/g. Deshalb wurde CaF₂ mit einem MAC-Wert von 94.96 cm²/g gewählt. Entsprechend der wissenschaftlichen Literatur werden für die Menge an internem Standard etwa 20 Ma.-% für einen amorphen Anteil der zu bestimmenden Probe zwischen 30 bis 90% empfohlen (Scrivener, Snellings, and Lothenbach. "Chapter 4. X-Ray Powder Diffraction Applied to Cement." A Practical Guide to Microstructural Analysis of Cementitious Materials. CRC/Taylor & Francis Group, 2016. 107-176). Die untersuchten Proben enthalten 10 Ma.-% bis 70 Ma.-% an röntgenamorphen bzw. nanokristalline Phasen mit Kristallitgößen < 5 nm, so dass 15 Ma.-% und 30 Ma.-% an internem Standard verwendet wurden.

Die mittels Röntgenbeugungsanalyse aufgezeichneten Röntgenbeugungsdiagramme (Diffraktogramme) wurden anschließend mittels Rietveld-Analyse mit der Software Topas 4.0 ausgewertet. Die Rietveld-Methode ist ein Standard-Verfahren zur Auswertung von Diffraktogrammen, die durch Röntgenbeugungsanalyse an Pulverproben gewonnen wurden. Die Methode ist ausführlich beschrieben z.B. in G. Will (2006): Powder Diffraction - The Rietveld method and the two-stage method, Springer Verlag, sowie R. Young (1995): The Rietveld method, IUCr Monographs on Crystallography, vol. 5, Oxford University Press.

Für die Rietveld-Analyse der vorliegenden Proben wurden folgende Strukturdaten entsprechend der Inorganic Crystal Structure Database (ICSD) verwendet:
Tobermorit (Mineral der Calcium-Silicat-Hydrate): ICSD-Nummer 152489
Calcit: ICSD-Nummer 79674
Quarz: ICSD-Nummer 174
Portlandit: ICSD-Nummer 15471
Fluorit: ICSD-Nummer 60368

Mittels Rietveld-Analyse wurde neben dem Phasengehalt der Einzelphasen auch die Kristallitgröße der Calcium-Silikat-Hydrat-Phase Tobermorit ermittelt. Die Kristallitgröße spiegelt sich in der Halbwertsbreite der Reflexe einer Phase wieder und wird bei der Verfeinerung während der Rietveld-Analyse ermittelt. Der Zusammenhang zwischen Halbwertsbreite eines Reflexes im Diffraktogramm und der Kristallitgröße ist beschrieben z.B. in Kapitel 5.4.1 ab Seite 142 in R. Dinnebier, S. Billinge (2008): Powder Diffraction - Theory and Practice, RSC Publishing sowie auf Seite 113 in G. Will (2006): Powder Diffraction - The Rietveld method and the two-stage method, Springer Verlag, sowie R. Young (1995): The Rietveld method, IUCr Monographs on Crystallography, vol. 5, Oxford University Press

Die Bestimmung des röntgenamorphen Anteils mittels internem Standard dient zur Quantifizierung der absoluten Menge der kristallinen Phasen und der röntgenamorphen Phasen und wurde entsprechend der Publikation von I. Madsen, N. Scarlett und A. Kern, "Description and survey of methodologies for the determination of amorphous content via X-ray powder diffraction." Zeitschrift für Kristallographie Crystalline Materials 226.12 (2011): 944-955 durchgeführt. Dabei wird während der Rietveld-Verfeinerung der bekannte Anteil des internen Standards vorgegeben und die anderen Phasen darauf bezogen. Der Differenz der Summe der kristallinen Phasen (Tobermorit, Calcit, Quarz, Portlandit, Fluorit) zu 100 Ma.-% entspricht dem röntgenamorphen Anteil der Probe.
(iv) Die Ladungsdichte wird bestimmt durch Titration mit poly-DADMAC (poly(diallyldimethylammonium chloride) oder Natrium-polyethylensulfonat mit einem Mettler Toledo DL 28 Titriergerät, kombiniert mit einem BTG Mütek Partikelladungsdetektor.
(v) Zur Bestimmung der Viskosität wurden die Suspensionen nach Ende der Vermahlung für 24 h bei Raumtemperatur verschlossen gelagert. Anschließend wurde an einem Brookfield-Viskosimeter DV-II+ bei 12 rpm mit Spindel 62 die Viskosität bestimmt.
(vi) Die Bestimmung des gewichtsmittleren Molgewichts des polymeren Dispergiermittels erfolgte mittels Gelpermeationschromatographie (GPC) (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von HCO₂NH₄ (0,05 mol/l) und 20 Vol.-% Acetonitril; Injektionsvolumen 100 µl; Durchflussrate 0,5 ml/min). Die Kalibrierung zur Bestimmung der mittleren Molmasse erfolgte mit linearen Poly(ethylenoxid)- und Polyethylenglykol-Standards.

Herstellung von polymeren Dispergiermitteln:
Polymere 1, 2 und 7
   In einem 1-Liter Vierhalskolben mit Thermometer, Rückflusskühler und einem Anschluss für zwei Zuläufe werden 875 g einer 40 %igen wässrigen Lösung von Polyethylenglycolhydroxybutyl-monovinylether und NaOH (20 %) vorgelegt. Bezüglich der Molmassen der jeweiligen Polyethylenglycolhydroxybutyl-monovinylether sind die Details in der Tabelle 2 zu finden. Danach wird die Lösung auf 20 ° C abgekühlt. Auf die Polyethylenglycol-hydroxybutyl-monovinylether-Lösung im Vorlagekolben wird nun langsam Acrylsäure (99 %) gegeben. Der pH-Wert nimmt dabei auf ca. 4-5 ab. Darauf werden dann 0,5 g Eisen(II)sulfat-Heptahydrat sowie 5 g Rongalit und Mercaptoethanol gegeben. Nach kurzem Einrühren werden weiterhin 3 g 50 %iges Wasserstoffperoxid zudosiert. Die Temperatur steigt dabei von 20 ° C auf ca. 30 ° C bis 65 ° C an. Die Lösung wird anschließend 10 Minuten gerührt, bevor sie mit Natronlauge (20 %) neutralisiert wurde. Man erhält eine leichtgelb gefärbte, klare wässrige Polymerlösung mit einem Feststoffgehalt von ca. 40 Gew.-%. Die Mengenangaben der verwendeten Chemikalien (NaOH, Mercaptoethanol und Acrylsäure) sowie die Molmassen des jeweiligen Polyethylenglycol-hydroxybutyl-monovinylethers (PEG-HBVE), gewichtsmittlere Molmasse und die Ladungsdichte des Polymers (Molzahl Carboxylat- und/oder Carboxylgruppen/ Gesamtmol-masse des PCEs) (mol/(g/mol)) sind den untenstehenden Tabellen 1 und 2 zu entnehmen.

**Tabelle 1: Details zur Herstellung der P1, P2 und P7**

| Polymer | NaOH (20 %) [g] | Mercaptoethanol [g] | Acrylsäure (99 %) [g] |
|---|---|---|---|
| P1 | 40 | 1,5 | 30,8 |
| P2 | 10 | 1,7 | 42,4 |
| P7 | 0 | 0,9 | 21,9 |

**Tabelle 2: Übersicht der strukturellen Parameter der Polymere**

| Polymer | Ladungsdichte (µeq/g) | M_{w} (g/mol) | Molmasse PEG-HBVE (g/mol) |
|---|---|---|---|
| P1 | 1110 | 28537 | 5800 |
| P2 | 1488 | 28659 | 3000 |
| P7 | 811 | 35665 | 5800 |

### Polymer P3

Das Polymer P3 ist ein Kammpolymer und basiert auf den Monomeren Maleinsäure, Acrylsäure und Vinyloxybutylpolyethyleneglykol - 5800. Das molare Verhältnis von Acrylsäure zu Maleinsäure beträgt 7. Das Molgewicht M_{W} beträgt 40.000 g/mol und wurde über GPC bestimmt. Der Feststoffgehalt beträgt 45 Gew. %. Die Synthese ist zum Beispiel in EP0894811 beschrieben. Die Ladungsdichte ist 930 µeq/g.

### Polymer P4

Das Polymer P4 ist ein Kondensat aus den Bausteinen PhenolPEG5000, Phenoxyethanolphosphat und Formaldehyd. Das Molekulargewicht M_{W} beträgt 25730 g/mol. Das Polymer wurde entsprechend Polymer 7 der WO2015/091461 (Tabelle 1 und 2) hergestellt.

### Polymer P5

Das Polymer P5 ist ein Kammpolymer polymerisiert aus einem Hydroxyethylmethacrylat-Phosphorsäureester und einem Ester von Methacrylsäure und Methylpolyethylenglykol mit einem Molekulargewicht von 5.000 g/mol. Die Synthese wurde entsprechend der Herstellung von P1 aus der WO2014/026938 durchgeführt. Das Molekulargewicht M_{W} beträgt 3660 g/mol. Der Feststoffgehalt der Polymerlösung beträgt 29 Ma.-%.

### Polymer P6

Das Polymer 6 ist ein kommerziell erhältliches, mit NaOH teilneutralisiertes Polyacrylat (Neutralisationsgrad 80%). Das mittlere Molgewicht M_{W} beträgt 5000 - 10.000 g/mol. Der Feststoffgehalt der Polymerlösung beträgt 45 Ma.-%.

### Oxidische Zusammensetzung (htCSH)

htCSH1: Circolit, erhältlich von der Cirkel GmbH & Co. KG, Haltern am See.

### htCSH2:

Für die Herstellung von htCSH2 wurden 153 kg Quarzmehl (d(95) < 63 µm, SiO₂-Gehalt > 95 Ma.-%), 150 kg Branntkalk (d(95) < 90 µm, CaO-Gehalt > 90 Ma.-%), 222 g Aluminiumpaste (Wassergehalt = 40 %, d(50) = 15 µm) und 340 kg Wasser vermischt.

Diese Suspension wurde 3 h bei einer Temperatur von 20 ° C stehen gelassen.

Anschließend wurde das Material 8 h in einem Autoklaven bei 150 ° C (ca. 5 bar) gehalten. Danach wurde das Material auf Raumtemperatur abgekühlt und weiter mittels Brecher und Kugelmühlen auf eine Partikelgröße d(95) < 1 mm sowie d(50) < 500 µm zerkleinert. Der Feuchtegehalt (bestimmt durch Trocknung bei 105 ° C bis zur Gewichtskonstanz) war 36,6 Ma.-%.

### htCSH3:

Für die Herstellung von htCSH3 wurden 100 kg Quarzmehl (d(95) < 63 µm, SiO₂-Gehalt > 95 Ma.-%), 200 kg Branntkalk (d(95) < 90 µm, CaO-Gehalt > 90 Ma.-%), 222 g Aluminiumpaste (Wassergehalt = 40 %, d(50) = 15 µm) und 410 kg Wasser vermischt. Diese Suspension wurde 3 h bei einer Temperatur von 20 ° C stehen gelassen. Anschließend wurde das Material 12 h in einem Autoklaven bei 170 ° C (ca. 8 bar) gehalten. Danach wurde das Material auf Raumtemperatur abgekühlt und weiter mittels Brecher und Kugelmühlen auf eine Partikelgröße d(95) < 1 mm sowie d(50) < 500 µm zerkleinert. Der Feuchtegehalt (bestimmt durch Trocknung bei 105 ° C bis zur Gewichtskonstanz) war 40,0 Ma.-%.

Die verwendeten Ausgangsmaterialien weisen folgende Eigenschaften auf (Tabelle 3):

**Tabelle 3**

| Typ | htCSH1 ** | htCSH2** | htCSH3 |
|---|---|---|---|
| Zusammensetzung (in Ma.-%) ⁽¹⁾ | | | |
| C-S-H-Komponente | | | |
| Kristalline C-S-H-Phase | Xonotlit | Tobermorit 14Å (zugrundegelegte C-S-H-Phase) | Tobermorit 14Å (zugrundegelegte C-S-H-Phase) |
| | 84,5 | 14,6 | 23,3 |
| Röntgenamorpher Anteil | 12,5. | 51,1 | 60,6 |
| Kristalline Fremdstoffkomponente | | | |
| Quarz | n.d. | 27,3 | 4,5 |
| Portlandit | n.d. | 2,6 | 7,0 |
| Calcit | 3,0 | 2,7 | 4,6 |
| Eigenschaften | | | |
| Kristallitgröße C-S-H-Phase | 33 nm | 3,6 nm | 3,6 nm |
| Partikelgrößenverteilung | | | |
| d(10) in µm | 1 | 7 | 6 |
| d(50) in µm | 7 | 101 | 109 |
| d(90) in µm | 21 | 217 | 227 |
| BET Oberfläche | 38 cm²/g | 113 cm²/g | 113 cm²/g |
| molares Verhältnis Ca/Si³) | 1,09 * | 0,89 ⁽²⁾ | 1,77 ⁽²⁾ |

| | | | |
|---|---|---|---|
| n.d.: nicht bestimmbar (Gehalt ist kleiner der Nachweisgrenze) * ermittelt aus Produktdatenblättern ⁽¹⁾ Aus der XRD mit anschließender Rietveld-Analyse ⁽²⁾ Ermittelt mittels Röntgenfluoreszensanalyse (XRF) ⁽³⁾ aus der Gesamtmenge der anorganischen Bestandteile des hydrothermalen CSH ** Vergleichsbeispiel | | | |

Die Nassmahlung des hydrothermal hergestellten Calciumsilikathydrats wurde mittels Schüttelsetup (Rüttler SK 300 von Fast & Fluid Management) durchgeführt. Die Bedingungen für die einzelnen Nassmahlungen sind in Tabelle 4 aufgelistet. Für die Vermahlung wurden 100 g der Suspension entsprechend der Parameter in Tabelle 4 in 250 ml Glasflaschen, die mit 500 g Mahlperlen aus ZrO₂ mit einem Durchmesser von 1 mm gefüllt waren, gegeben. Die Mahlung fand statt auf Stufe 3 bei einer Wirkleistung I₀ von 1281,1 W statt. Zwischen der Herstellung der Suspensionen (Vermischen von hydrothermalem C-S-H, Wasser und wasserlöslischem Polymer) und der eigentlichen Nassmahlung unter hoher Scherenergie wurden die Suspension 30 Minuten ohne zusätzliche mechanische Schereinwirkung ruhen gelassen. Nach der Mahlung wurden die Suspension durch ein Sieb von den Mahlperlen abgetrennt und teilweise mit destilliertem Wasser nachgespült. Der Feststoffgehalt der Suspension wurde anschließend durch Trocknen der Suspension bei 60 ° C bis zur Gewichtskonstanz ermittelt.

Für den Vergleich zum Stand der Technik wurden 3 Suspensionen durch Fällung gemäß WO 2010/026155 hergestellt (pptCSH). Diese enthalten amorphe CSH-Keime, die durch das Polymer stabilisiert sind.

**Tabelle 4**

| Beispiel | Ausgangs -material | Gehalt hydrothermales CSH (Ma.-%) | Polymer | Polymergehalt (Feststoff) in Suspension (Ma.-%) | Feststoffgehalt nach Mahlung ⁽¹⁾ (Ma.-%) | Mahldauer (min) | Scherenergie (kWh/t) |
|---|---|---|---|---|---|---|---|
| S1* | htCSH1 | 15 | - | - | 15.26 | 180 | 604 |
| S2* | htCSH1 | 15 | P4 | 2.5 | 17.67 | 180 | 604 |
| S3* | htCSH1 | 15 | P1 | 2.5 | 17.63 | 180 | 604 |
| S4* | htCSH1 | 15 | P3 | 2.5 | 17.69 | 180 | 604 |
| S5* | htCSH1 | 15 | P6 | 2.5 | 17.48 | 180 | 604 |
| S6* | htCSH1 | 15 | P5 | 2.5 | 17.73 | 180 | 604 |
| S7* | htCSH2 | 15 | P1 | 2,5 | 11.22 | 180 | 604 |
| S8* | htCSH2 | 15 | P1 | 3,5 | 12.38 | 180 | 604 |
| S9* | htCSH2 | 15 | P1 | 7,5 | 15.79 | 180 | 604 |
| S10 | htCSH3 | 15 | P1 | 2,5 | 11.56 | 180 | 604 |
| S11 | htCSH3 | 15 | P1 | 3,5 | 12.70 | 180 | 604 |
| S12 | htCSH3 | 15 | P1 | 7,5 | 16.27 | 180 | 604 |
| S13 | htCSH3 | 13,91 | P7 | 2,8 | 15.22 | 20 | 67 |
| S14 | htCSH3 | 13,91 | P7 | 2,8 | 16.72 | 60 | 201 |
| S15 | htCSH3 | 13,91 | P7 | 2,8 | 16.86 | 120 | 402 |
| S16* | ppt CSH | -- | P7 | 2,8 | 17.92⁽²⁾ | 20 | 67 |
| S17* | ppt CSH | -- | P7 | 2,8 | 18.01⁽²⁾ | 60 | 201 |
| S18* | ppt CSH | -- | P7 | 2,8 | 18.22⁽²⁾ | 120 | 402 |

| | | | | | | | |
|---|---|---|---|---|---|---|---|
| ⁽¹⁾ Der Feststoffgehalt der Suspension nach der Mahlung wurde durch Trocknen von 1 g Suspension bei 60 ° C im Trockenschrank bis zur Gewichtskonstanz ermittelt. ⁽²⁾ vor der Viskositätsmessung wurden die Proben auf einen Feststoffgehalt von 15 Ma.-% mit Wasser verdünnt. * Vergleichsbeispiel | | | | | | | |

Für den Vergleich zum Stand der Technik gemäß WO 2010/026155 wurden 3 Suspensionen (S16, S17, S18) sowie 3 erfindungsgemäße Suspensionen (S13, S14, S15) hergestellt, wobei bei den Beispielen S13 bis S18 194 g Suspension in den 250 ml Flaschen bei einer Mahlkugelmenge von 500 g vermahlen wurden.

Für die Herstellung von S16 bis S18 wurden 15,5 g Ca(OH)₂ (Merck, CAS 1305-62-0, Reinheit > 97 %) und 12,1 g SiO₂ (Silica, fumed; CAS 112945-52-5, Sigma Aldrich, Reinheit > 99,9 %) mit Wasser und Polymer (siehe Tabelle 2 oben) vermischt, so dass die Gesamtmasse der Suspension 194 g ergab.

Zur Bestimmung der Scherenergie wurde während des Betriebs des Rüttler SK 300 mittels AC-Vielfachmesszange MX 350 der Firma Metrix die Stromstärke im Leerbetrieb I₀ (Rüttelbewegung ohne Mahlperlen und Mahlgut) sowie die Stromstärke im Mahlbetrieb I_{P} (Rüttelbewegung bei gefüllten Glasflaschen mit Mahlperlen und Mahlgut) gemessen. Die Wirkspannung lag in beiden Fällen 230 V.

Die sich aus den gemessenen Stromstärken ergebene Wirkleistung I₀ lag bei 1281,1 W während die Wirkleistung im Mahlbetrieb I_{P} für die Mahlung von 400 g Suspension bei 1361,6 W lag. Daraus ergibt sich eine notwendige Wirkleistung P_{W} von 201,25 W bei der Mahlung von 1 kg Suspension.

Der Polymergehalt in der Suspension bezieht sich immer auf den Feststoffgehalt des verwendeten Polymers.

Die Suspensionen wurden hinsichtlich Beschleunigungswirkung mittels Wärmeflusskalorimetrie und hinsichtlich Viskosität mittels Brookfield-Viskosimeter charakterisiert.

Wärmeflusskalorimetrie:
Zur Bestimmung der Beschleunigungsleistung der Beschleunigersuspensionen wurden Zementpasten, die die Beschleunigersuspensionen enthalten, hergestellt und deren Hydratationskinetik mittels isothermer Wärmeflusskaloriemtrie gemessen.

Dazu wurden 100 g Portland-Zement (CEM I 52.5 R) mit 40 g Wasser mittels Überkopfrührer für 90 Sekunden bei 500 rpm vermischt. Die zu prüfenden Suspension wurde mit dem Anmachwasser zu dem Zement gegeben, wobei dann die Anmachwassermenge auf die in der Suspension enthaltenen Wassermenge korrigiert wurde, so dass bei jedem Versuch ein Wasser/Zement-Wert von 0.4 eingestellt wurde. Die Zugabemengen der zu prüfenden Suspension sind in Tabelle 5 erfasst.

Jeweils 6 g Mörtel oder Zementpaste wurden dann in das Messgefäß eingefüllt und dieses in das Kalorimeter eingeführt. Die isotherme Wärmeflusskalorimetrie wurde mit dem Kalorimeter TAMAir von TA Instruments bei 20° C durchgeführt.

Es wurde die kumulierte Hydratationswäre nach 6 h ermittelt. Weiterhin wurden zum Vergleich der Proben jeweils die maximalen Steigungen im Wärmefluss zwischen 2 und 8 Stunden ermittelt und diese auf die Steigung der Vergleichsmessung (Zement + Wasser) bezogen. Die Bestimmung der relativen Steigung wurde entsprechend der Veröffentlichung von L. Nicoleau (2012) durchgeführt (L. Nicoleau: The acceleration of cement hydration by seeding: Influence of the cement mineralogy. Ibausil 18. Internationale Baustofftagung in Weimar (2012), Tagungsband Seiten 1-0330 - 1-0337). Die Ergebnisse der kalorimetrischen Messungen sind in der nachfolgenden Tabelle 5 zusammengestellt:
Die Ergebnisse sind in Tabelle 5 erfasst.

**Tabelle 5**

| Beschleunigersuspension | Viskosität Suspension (mPas) | Zugabemenge Suspension bezogen auf Zement (Ma.%) | Zugabemenge CSH-Ausgangsmaterial, bezogen auf Zement | HoH nach 6 h [J/g Zement] | Beschleunigungsfaktor |
|---|---|---|---|---|---|
| ohne | | - | | 23,25 | 1,00 |
| S1 | >100000 | 3,28 | 0,5 Ma.-% | 38,08 | 1,11 |
| S1 | >100000 | 6,55 | 1,0 Ma.-% | 46,89 | 1,11 |
| S2 | 85 | 3,30 | 0,5 Ma.-% | 41,52 | 1,30 |
| S2 | 85 | 6,60 | 1,0 Ma.-% | 49,83 | 1,54 |
| S3 | 30 | 3,31 | 0,5 Ma.-% | 42,07 | 1,39 |
| S3 | 30 | 6,62 | 1,0 Ma.-% | 53,18 | 1,83 |
| S4 | 20 | 3,30 | 0,5 Ma.-% | 41,82 | 1,37 |
| S4 | 20 | 6,60 | 1,0 Ma.-% | 51,87 | 1,65 |
| S5 | 3 | 3,34 | 0,5 Ma.-% | 33,41 | 1,35 |
| S5 | 3 | 6,68 | 1,0 Ma.-% | 36,38 | 1,61 |
| S6 | 7.5 | 3,29 | 0,5 Ma.-% | 33,83 | 1,20 |
| S6 | 7.5 | 6,58 | 1,0 Ma.-% | 41,04 | 1,41 |
| S7 | 10 | 5,20 | 0,5 Ma.-% | 48,32 | 1,85 |
| S7 | 10 | 10,40 | 1,0 Ma.-% | 59,95 | 2,37 |
| S8 | 20 | 4,98 | 0,5 Ma.-% | 44,66 | 1,87 |
| S8 | 20 | 9,96 | 1,0 Ma.-% | 54,99 | 2,26 |
| S9 | 30 | 4,75 | 0,5 Ma.-% | 33,32 | 1,50 |
| S9 | 30 | 9,50 | 1,0 Ma.-% | 36,27 | 1,70 |
| S10 | 15 | 5,05 | 0,5 Ma.-% | 57,74 | 2,13 |
| S10 | 15 | 10,09 | 1,0 Ma.-% | 69,02 | 2,70 |
| S11 | 15 | 4,85 | 0,5 Ma.-% | 55,01 | 2,22 |
| S11 | 15 | 9,71 | 1,0 Ma.-% | 67,23 | 2,65 |
| S12 | 20 | 4,61 | 0,5 Ma.-% | 41,01 | 2,26 |
| S12 | 20 | 9,22 | 1,0 Ma.-% | 45,66 | 2,52 |
| S13 | 18 | 9,86 | 1,25 Ma.-% | 51,30 | 1,42 |
| S14 | 20 | 8,97 | 1,25 Ma.-% | 59,42 | 1,67 |
| S15 | 35 | 8,90 | 1,25 Ma.-% | 65,31 | 1,79 |
| S16 | >100000 | 8,37 | 1,25 Ma.-% | 64,91 | 1,65 |
| S17 | >100000 | 8,33 | 1,25 Ma.-% | 68,95 | 1,80 |
| S18 | >100000 | 8,23 | 1,25 Ma.-% | 66,58 | 1,69 |

| | | | | | |
|---|---|---|---|---|---|
| HoH: kumulierte Hydratationswärme ab 0,5 h Hydratation. | | | | | |

Eine Viskosität von > 100000 bedeutet, dass die Viskosität nicht messbar war, weil sich ein festes Gel ausgebildet hat.

## Patentansprüche

1. Oxidische Zusammensetzung mit einer Teilchengröße d(97) von ≤ 5 mm, umfassend mindestens 95 Gew.-%, bezogen auf das Trockengewicht der oxidischen Zusammensetzung, Calciumoxid und Siliciumoxid mit einem molaren Verhältnis Ca/Si im Bereich von 1,0 bis 2,0, wobei die oxidische Zusammensetzung ein semigeordnetes Calciumsilikathydrat mit einer scheinbaren Kristallitgröße von 1 bis 10 nm, bestimmt mittels Röntgenbeugungsanalyse und anschließender Rietveld-Analyse, welches semigeordnete Calciumsilikathydrat (1) einen geringeren Ordnungsgrad aufweist als ein makroskopisches kristallines Calciumsilikathydrat und (2) einen höheren Ordnungsgrad als amorphes Calciumsilikathydrat, und weniger als 35 Gew.-% kristalline Phasen von Portlandit (Ca(OH)₂), Calcit (CaCO₃), Aragonit (CaCO₃), Vaterit (CaCO₃) und *α*-Quarz enthält.

2. Oxidische Zusammensetzung nach Anspruch 1, wobei die Summe an semigeordnetem Calciumsilikathydrat und röntgenamorpher Phase wenigstens 65 Gew.-% beträgt.

3. Oxidische Zusammensetzung nach Anspruch 1 oder 2, mit einer spezifischen BET-Oberfläche im Bereich von 30 bis 150 m²/g, bevorzugt 80 bis 150, insbesondere 90 bis 150 m²/g, bestimmt nach DIN ISO 9277:2003-05.

4. Verfahren zur Herstellung einer oxidischen Zusammensetzung nach einem der Ansprüche 1 bis 3 durch hydrothermale Umsetzung einer Calciumhydroxidquelle mit Siliciumdioxid in Anwesenheit von Wasser bei einer Temperatur im Bereich von 130 bis 180 ° C in einem geschlossenen Behälter und einem sich daraus ergebenden Druck über einen Zeitraum von 5h bis 30h und mechanische Zerkleinerung des erhaltenen hydrothermalen Calciumsilikathydrats bei einer Temperatur von ≤ 80 ° C, wobei das Verhältnis der Summe der Masse von Calciumhydroxidquelle und Siliciumdioxid zu der Masse an Wasser im Bereich von 1:9 bis 2:1, bevorzugt im Bereich von 1:3 bis 1:1 liegt.

5. Verfahren nach Anspruch 4, wobei die Umsetzung bei einer Temperatur im Bereich von 150 bis 180 ° C oder 155 bis 180 ° C, insbesondere 160° C bis 180° C, erfolgt.

6. Verfahren nach Ansprüche 4 oder 5, wobei die Calciumhydroxidquelle ausgewählt ist unter Calciumoxid, Calciumhydroxid, Calciumoxid- oder Calciumhydroxidenthaltenden Mineralien und Mischungen davon, insbesondere Calciumoxid, Calciumhydroxid und Mischungen davon.

7. Verfahren nach einem der Ansprüche 4 bis 6, wobei das Siliciumdioxid ausgewählt ist unter Quarzsand, Quarzmehl und Mikrosilica.

8. Verfahren nach einem der Ansprüche 4 bis 7, wobei das Verhältnis der Summe der Masse von Calciumhydroxidquelle und Siliciumdioxid zu der Masse an Wasser, mit dem die Calciumhydroxidquelle sowie Siliciumdioxid vor dem Autoklavieren vermischt wird, im Bereich von 1:9 bis 2:1, bevorzugt im Bereich von 1:3 bis 1:1 liegt.

9. Verfahren nach einem der Ansprüche 4 bis 8, wobei die Umsetzung über einen Zeitraum im Bereich von 7h bis 20 h, bevorzugt 11 h bis 20 h, insbesondere 13 h bis 20 h erfolgt.

10. Verfahren nach einem der Ansprüche 4 bis 9, wobei die Umsetzung in Anwesenheit eines Schäumungsmittels durchgeführt wird.

11. Verfahren nach Anspruch 10, wobei als Schäumungsmittel Aluminiumpulver oder eine metallisches Aluminium enthaltende Paste verwendet wird.

12. Verfahren nach einem der Ansprüche 4 bis 11, wobei das Verfahren ohne Zusatz anderer Bestandteile und insbesondere ohne Zusatz von Portland-Zement, Portland-Zementklinker und/oder Ettringit durchgeführt wird.

## Claims

1. An oxidic composition having a particle size d(97) of ≤ 5 mm, comprising at least 95 wt.-%, based on the dry weight of the oxidic composition, of calcium oxide and silicon oxide with a molar ratio of Ca/Si in the range of 1.0 to 2.0, wherein the oxidic composition comprises a semi-ordered calcium silicate hydrate with an apparent crystallite size of 1 to 10 nm, determined by X-ray diffraction analysis followed by Rietveld analysis, which semi-ordered calcium silicate hydrate has (1) a lower degree of order than a macroscopic crystalline calcium silicate hydrate and (2) a higher degree of order than amorphous calcium silicate hydrate, and comprises less than 35 wt.-% of crystalline phases of portlandite (Ca(OH)₂), calcite (CaCO₃), aragonite (CaCO₃), vaterite (CaCO₃), and α-quartz.

2. The oxidic composition according to claim 1, wherein the sum of semi-ordered calcium silicate hydrate and X-ray-amorphous phase is at least 65 wt.-%.

3. The oxidic composition according to claim 1 or 2, having a specific BET surface area in the range of 30 to 150 m²/g, preferably 80 to 150, in particular 90 to 150 m²/g, determined in accordance with DIN ISO 9277:2003-05.

4. A process for preparing an oxidic composition according to any one of claims 1 to 3 by hydrothermal reaction of a calcium hydroxide source with silicon dioxide in the presence of water at a temperature in the range of 130 to 180 °C under autogenous pressure in a closed vessel over a period of 5 to 30 h, and mechanical comminution of the obtained hydrothermal calcium silicate hydrate at a temperature of ≤ 80 °C, wherein the ratio of the sum of the mass of the calcium hydroxide source and silicon dioxide to the mass of water is in the range of 1:9 to 2:1, preferably in the range of 1:3 to 1:1.

5. The process according to claim 4, wherein the reaction is carried out at a temperature in the range of 150 to 180 °C or 155 to 180 °C, in particular 160 °C to 180 °C.

6. The process according to claim 4 or 5, wherein the calcium hydroxide source is selected from calcium oxide, calcium hydroxide, minerals containing calcium oxide or calcium hydroxide and mixtures thereof, in particular calcium oxide, calcium hydroxide and mixtures thereof.

7. The process according to any one of claims 4 to 6, wherein the silicon dioxide is selected from quartz sand, quartz powder, and microsilica.

8. The process according to any one of claims 4 to 7, wherein the ratio of the sum of the mass of the calcium hydroxide source and silicon dioxide to the mass of water with which the calcium hydroxide source and the silicon dioxide are mixed prior to autoclaving is in the range of 1:9 to 2:1, preferably in the range of 1:3 to 1:1.

9. The process according to any one of claims 4 to 8, wherein the reaction is carried out over a period in the range of 7 h to 20 h, preferably from 11 h to 20 h, in particular 13 h to 20 h.

10. The process according to any one of claims 4 to 9, wherein the reaction is carried out in the presence of a foaming agent.

11. The process according to claim 10, wherein aluminum powder or a paste containing metallic aluminum is used as the foaming agent.

12. The process according to any one of claims 4 to 11, wherein the process is carried out without the addition of further components and, in particular, without the addition of Portland cement, Portland cement clinker and/or ettringite.

## Revendications

1. Composition à base d'oxydes présentant une distribution granulométrique d(97) inférieure ou égale à 5 mm, comportant au moins 95 % en poids, par rapport au poids sec de la composition à base d'oxyde, d'oxyde de calcium et d'oxyde de silicium selon un rapport molaire Ca/Si situé dans la plage de 1,0 à 2,0 ; ladite composition à base d'oxyde contenant un silicate de calcium hydraté semi-ordonné ayant une taille apparente de cristallites de 1 à 10 nm, déterminée au moyen d'une analyse par diffraction X suivie d'une analyse de Rietveld, lequel silicate de calcium hydraté semi-ordonné présente (1) un degré d'ordonnancement inférieur à celui d'un silicate de calcium hydraté cristallin macroscopique et (2) un degré d'ordonnancement supérieur à celui d'un silicate de calcium hydraté amorphe, et contenant moins de 35 % en poids de phases cristallines de portlandite (Ca(OH)₂), calcite (CaCO₃), aragonite (CaCO₃), vatérite (CaCO₃) et α-quartz.

2. Composition à base d'oxydes selon la revendication 1, dans laquelle le total du silicate de calcium hydraté semi-ordonné et de la phase amorphe aux rayons X représente au moins 65 % en poids.

3. Composition à base d'oxydes selon la revendication 1 ou 2, présentant une surface spécifique BET allant de 30 à 150 m²/g, de préférence de 80 à 150, notamment de 90 à 150 m²/g, déterminée selon la norme DIN ISO 9277:2003-05.

4. Procédé de production d'une composition à base d'oxydes selon l'une des revendications 1 à 3 par réaction hydrothermale d'une source d'hydroxyde de calcium avec du dioxyde de silicium en présence d'eau, à une température allant de 130 à 180 °C dans une cuve fermée et à la pression qui en résulte sur une période de 5 à 30 h et par broyage mécanique du silicate de calcium hydraté hydrothermal obtenu à une température inférieure ou égale à 80 °C, le rapport du total de la masse de source d'hydroxyde de calcium et de dioxyde de silicium à la masse d'eau se situant dans la plage allant de 1:9 à 2:1, de préférence dans la plage de 1:3 à 1:1.

5. Procédé selon la revendication 4, dans lequel la réaction est effectuée à une température comprise dans une plage allant de 150 à 180 °C ou de 155 à 180 °C, notamment de 160 à 180 °C.

6. Procédé selon la revendication 4 ou 5, dans lequel la source d'hydroxyde de calcium est choisie parmi l'oxyde de calcium, l'hydroxyde de calcium, les minéraux contenant de l'oxyde de calcium ou de l'hydroxyde de calcium, et leurs mélanges, notamment l'oxyde de calcium, l'hydroxyde de calcium et leurs mélanges.

7. Procédé selon l'une des revendications 4 à 6, dans lequel le dioxyde de silicium est choisi parmi le sable de quartz, la poudre de quartz et la microsilice.

8. Procédé selon l'une des revendications 4 à 7, dans lequel le rapport du total de la masse de source d'hydroxyde de calcium et de dioxyde de silice à la masse d'eau à laquelle la source d'hydroxyde de calcium et le dioxyde de silice sont mélangés avant l'autoclavage se situe dans la plage allant de 1:9 à 2:1, de préférence dans la plage de 1:3 à 1:1.

9. Procédé selon l'une des revendications 4 à 8, dans lequel la réaction est effectuée sur une période allant de 7 à 20 h, de préférence de 11 à 20 h, notamment de 13 à 20 h.

10. Procédé selon l'une des revendications 4 à 9, dans lequel la réaction est effectuée en présence d'un agent moussant.

11. Procédé selon la revendication 10, dans lequel de la poudre d'aluminium ou une pâte contenant de l'aluminium métallique est utilisée comme agent moussant.

12. Procédé selon l'une des revendications 4 à 11, le procédé étant mis en œuvre sans ajout d'autres composants et, notamment, sans ajout de ciment Portland, de clinker de ciment Portland et/ou d'ettringite.
